# EUROPEAN PATENT APPLICATION

(11) **EP 1 803 776 A1**
(43) Date of publication of application: **04.07.2007**
(21) Application number: 04773817.4
(22) Date of filing: 18.10.2004
(51) Int. Cl.: C08L 83/04, C08L 83/08

(54) **SILICONE COMPOSITION FOR HEAT DISSIPATION**

(71) Applicant: Nippon Koyu Ltd., Chuo-ku Tokyo 103-0027 (JP); Momentive Performance Materials Japan LLC, Tokyo 107-6112 (JP)
(72) Inventor: TAKEMURA, Kunio c/o Nippon, koyu Ltd., Ota-ku, Tokyo (JP); KIMURA, Yasuhiro c/o Nippon, koyu Ltd., Ota-ku, Tokyo (JP); ARAKI, Jun c/o Nippon, koyu Ltd., Ota-ku, Tokyo (JP); NISHIMURA, Hiroshi c/o Nippon koyu Ltd., Chuo-ku Tokyo (JP); TAKEZAWA, Yoshiaki c/o Momentive Performance, Minato-ku, Tokyo (JP); HOSHINO, Chisato c/o Momentive Performance, Minato-ku, Tokyo (JP); NISHIWAKI, Nobuyuki c/o Momentive Performance, Minato-ku, Tokyo (JP)
(74) Representative: Ackroyd, Robert
(86) International application number: PCT/JP2004/015747
(87) International publication number: WO 2006/043334

(57) **Abstract**

The present invention is a heat radiating silicone composition containing (A) a perfluoroalkyl group-containing silicone oil expressed by the following formula (1), (B) a silicone oil, and (C) a heat radiating filler: 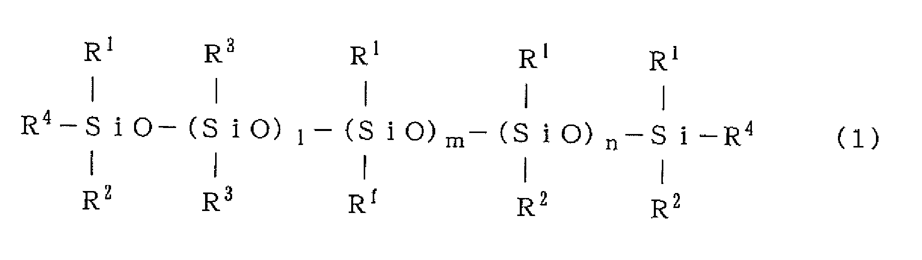 where R¹ is a C₁ to C₁₂ saturated hydrocarbon group, R² is a hydrogen or a C₁ to C₁₂ saturated or unsaturated hydrocarbon group, R³ is an aryl group, R^{f} is a C₁ to C₁₂ perfluoroalkyl group, R⁴ is a group selected from among R¹, R², R³, R^{f} and OH, 1 and m are values of 1 or more on the average, and 1 + m + n is a number of 2 or more.

A silicone composition for heat dissipation which comprises (A) a perfluoroalkyl-containing silicone oil represented by the following general formula (1), (B) a silicone oil, and (C) a filler for heat dissipation. In the formula, R¹ represents a C₁₋₁₂ saturated hydrocarbon group; R² represents hydrogen or a C₁₋₁₂ (un)saturated hydrocarbon group; R³ represents aryl; R^{f} represents C₁₋₁₂ perfluoroalkyl; R⁴ represents a group selected among R¹, R², R³, R^{f}, and OH; and 1 and m each is a number of 1 or larger on the average, provided that 1+m+n is a number of 2 or larger.

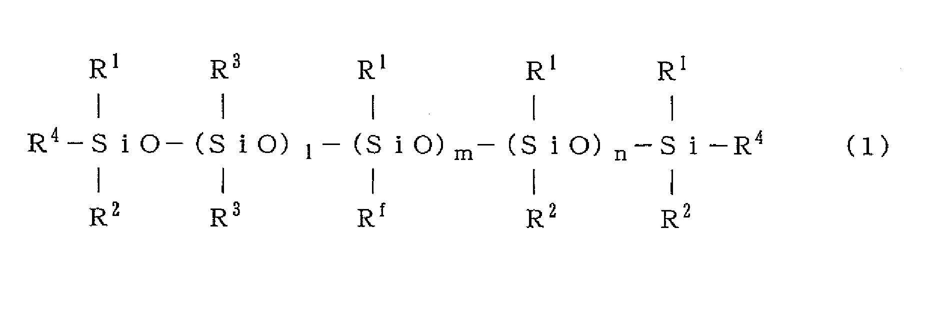

## Description

### Technical Field

The present invention relates to a heat radiating silicone composition.

### Background Art

Many electrical and electronic parts produce heat during their use, and this heat must be efficiently eliminated for these electrical and electronic parts to operate properly. In particular, the heat generated by a CPU (Central Processing Unit) installed in a computer or the like needs to be dissipated by any of various methods for the CPU to operate at full capacity. The increased performance of CPUs in recent years has led to the generation of more heat, and this requires some means for eliminating or dissipating the heat.

Various methods have been proposed as means for eliminating heat from electrical and electronic parts. A heat sink or other heat radiating material is used for release to the outside any heat generated from a semiconductor chip. Usually, a heat radiating material with excellent thermal conductivity is used to reduce contact thermal resistance between a heat sink or the like and a semiconductor package in which a semiconductor chip is housed. Grease or compound is used as this type of material.

Heat radiating grease and compound of this type known in the past were based on dimethyl silicone oil, to which was added an inorganic compound such as zinc oxide or aluminum oxide.

However, although these heat radiating greases and compounds are excellent in workability or handling and have a good heat radiating effect, the dimethyl silicone oil oozes out during extended use under high temperatures, and foul or stain the package, among other such problems.

In view of this, reducing this seepage by introducing various kinds of group into a polysiloxane side chain of the base oil has been attempted, and methylphenyl silicone oil, alkyl-modified silicone oil, and so forth have been developed.

Nevertheless, methylphenyl silicone oil has a poor effect, and although seepage is indeed reduced when an alkyl-modified silicone oil, in which a so-called long-chain alkyl group such as a decyl group or dodecyl group has been introduced into a side chain, is used alone, the heat radiation is not as good as when dimethyl silicone oil is used, and problems are also encountered with heat resistance.

As mentioned above, a grease obtained by adding a metal oxide to dimethyl silicone oil has excellent thermal stability and heat radiation properties, but a major concern is oil adsorption into a coated object. On the other hand, when an alkyl-modified oil is used alone, oil adsorption is reduced, but heat radiation is lower, so there is a problem with stability at high temperatures.

### Disclosure of the Invention

The present invention is conceived in response to the problems encountered with such prior arts, and it is purpose thereof to provide a heat radiating silicone composition that does not seep much into the material being coated, and that has excellent thermal stability and heat radiation properties.

As a result of diligent research aimed at achieving the stated purpose, the inventors arrived at the present invention upon discovering that a perfluoroalkyl group-containing silicone oil is added to an alkyl-modified silicone oil and it is possible to improve heat radiation and obtain a heat radiating grease that does not seep much into a coated object and that has an excellent thermal stability and heat radiation properties.

The present invention is a heat radiating silicone composition containing (A) a perfluoroalkyl group-containing silicone oil expressed by the following formula (1), (B) a silicone oil and (C) a heat radiating filler: 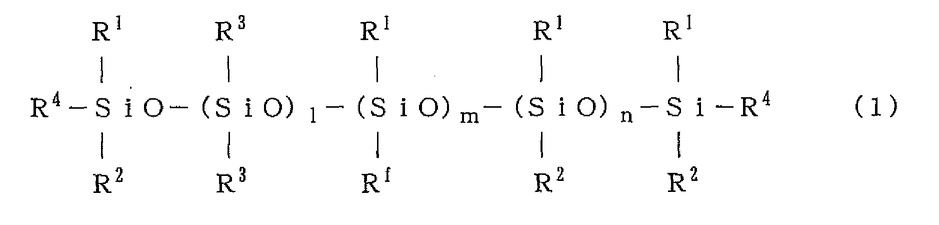 where R¹ is a C₁ to C₁₂ saturated hydrocarbon group, R² is a hydrogen or a C₁ to C₁₂ saturated or unsaturated hydrocarbon group, R³ is an aryl group, R^{f} is a C₁ to C₁₂ perfluoroalkyl group, R⁴ is a group selected from R¹, R², R³, R^{f} and OH, 1 and m are values of 1 or more on the average, and 1 + m + n is a number of 2 or more.

The present invention also provides use of the above-mentioned silicone composition as a heat radiating material, and a method for radiating heat including applying the above-mentioned silicone composition at a site where heat radiation is required.

### Detailed Description of the Invention

Each component of the heat radiating silicone composition of the present invention will now be described. Component (A): perfluoroalkyl group-containing silicone oil

The perfluoroalkyl group-containing silicone oil expressed by the above-mentioned formula (1), which is a characteristic feature of the present invention, will be described.

Of the functional groups in the formula (1), R¹, R² and R⁴ are preferably the same kind of functional group, and even more preferably are a methyl group. It is also preferable if R³ is a phenyl group and R^{f} is perfluoroalkyl group with a carbon number. 1, m and n are a number, and 1 is preferably from 0.5 to 20, m from 0.5 to 10, and n from 0.5 to 10.

### Component (B): silicone oil

The silicone oil of component (B) is the base for the heat radiating silicone composition of the present invention. The silicone oil is expressed by the formula (2), and its viscosity at 25°C is from 10 to 100,000 cSt.

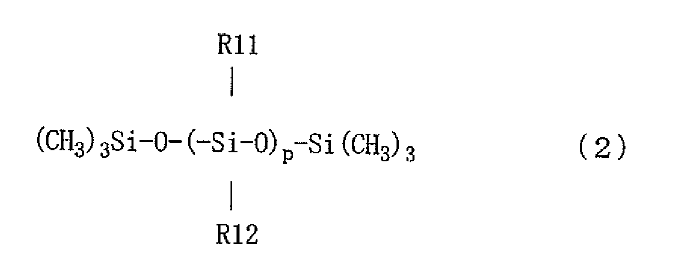

In the formula 2, R11 is at least one kind of hydrocarbon group selected from methyl group, ethyl group, propyl group, vinyl group, allyl group and phenyl group, and is preferably methyl group because synthesis will be easier. R12 is a C₆ to C₂₀ alkyl group or aralkyl group, and preferably a C₈ to C₁₄ alkyl group or aralkyl group. Specific examples of C₆ to C₂₀ alkyl groups and aralkyl groups include alkyl groups such as hexyl, octyl, decyl, dodecyl, tetradecyl, hexadecyl or octadecyl, and aralkyl groups such as 2-phenylethyl or 2-phenylpropyl. In the present invention, it is particularly preferable from the standpoint of seepage for this to be a decyl group or dodecyl group.

### Component (C): heat radiating filler

The heat radiating filler is selected from among aluminum, zinc oxide, aluminum oxide, aluminum nitride, boron nitride, and the like. To minimize damage to the surface of the material being coated, the particle size of the heat radiating filler is preferably 100 µm or less, and more preferably 40 µm or less.

Embodiments of the present invention will now be described in detail.

The heat radiating silicone composition of the invention described in the claims of this application is characterized in that the perfluoroalkyl group-containing silicone oil of component (A) is added in an amount of 0.5 to 50 weight parts per 100 weight parts of the silicone oil of component (B).

Preferably, the perfluoroalkyl group-containing silicone oil of component (A) is added in an amount of 0.5 to 10 weight parts per 100 weight parts of the silicone oil of component (B).

If the perfluoroalkyl group-containing silicone oil
(A) accounts for less than 0.5 weight part per 100 weight parts of the silicone oil of component B, it will not have its effect on heat radiation properties and thermal stability, but it is undesirable for it to account for more than 50 weight parts because the material will be more difficult to handle.

The present invention is also characterized in that R11 in the formula (2) of component (B) is methyl group, and R12 is a C₄ to C₁₄ alkyl group or aralkyl group. It is undesirable for the carbon number of R12 to be 4 or less because seepage will be more prone to occur, but it is also undesirable for this number to be 14 or more because the material will tend to be a solid at room temperature and more difficult to handle.

It is considered that adding component (A) to component (B) in the above-mentioned heat radiating silicone composition maintains the characteristics of component (B), namely, little seepage (oil adsorption) into the material being coated, while also improving heat radiation properties and maintaining stability under high temperature environments. Specifically, the amount of inorganic compound filler with good thermal conductivity may be increased merely to improve heat radiation properties, but if the fill amount is too large, uniform dispersion will be difficult to achieve, and properties as a grease will be lost, so there is a limit to the fill amount. It is considered that using component (A) in component (B) allows the inorganic compound and heat radiating filler to be dispersed stably, and also improves heat radiation properties and ensures a good heat resistance and a high temperature stability. Therefore, the present invention makes it possible to obtain a heat radiating silicone composition that is less likely to seep into the material being coated, and also has excellent thermal stability and heat radiation properties.

The heat radiating filler used as component (C) in the present invention is an inorganic compound selected from among aluminum, zinc oxide, aluminum oxide, aluminum nitride, boron nitride, and the like. To keep the material in the form of a grease while obtaining high thermal conductivity, component (C) is preferably a mixture of three or more components, in which aluminum and zinc oxide are essential components and which contains at least one type of filler selected from among aluminum nitride, aluminum oxide, boron nitride, and the like. More preferably, component (C) is a mixture of four or more components, in which aluminum and aluminum nitride and zinc oxide are essential components and which contains at least one type of filler selected from among aluminum oxide, boron nitride, and the like.

In addition to the components mentioned above, the composition of the present invention can also contain various additives as needed. For example, any known substances generally used in the blending of silicone rubber and the like can be used, reinforced silica such as fumed silica, wet silica or calcined silica, metal oxides such as titanium oxide, iron oxide, cerium oxide, vanadium oxide, cobalt oxide, chromium oxide or manganese oxide, and complexes thereof, inorganic fillers such as quartz powder, diatomaceous earth, calcium carbonate, magnesium carbonate, alumina or carbon. Also, pigments, thermal stabilizers, flame retardants, plasticizers, thickeners, tackifiers and the like may be added as long as the intended characteristics are not damaged. These optional components can be used in their usual amounts, to the extent that they do not hinder the effect of the present invention.

Adding the perfluoroalkyl group-containing silicone oil of the present invention not only reduces foaming itself and requires less defoaming work, but also causes bubbles to break more readily if foaming should occur, and therefore exhibits an extremely good effect in terms of defoaming and antifoaming.

Any conventional method can be employed for preparing the heat radiating silicone composition of the present invention.

With the present invention, when a suitable amount of a perfluoroalkyl group-containing silicone oil is added to an alkyl-modified silicone oil, the heat radiation properties are enhanced, a heat radiating grease having a small seepage into a coated object, an excellent thermal stability and heat radiation properties can be obtained. Also, adding the perfluoroalkyl group-containing silicone oil of the present invention not only reduces foaming itself and requires less defoaming work, but also causes bubbles to break more readily if foaming should occur, and therefore exhibits an extremely good effect in terms of defoaming and antifoaming. Furthermore, specifying the composition of the heat radiating filler makes it possible to obtain a heat radiating silicone composition that maintains its properties as a grease while have improved heat radiation properties and having good heat resistance and high temperature stability.

As will be seen from Examples and Comparative Examples, the heat radiating silicone composition of the present invention is characterized in that heat radiation properties can be improved by adding a suitable amount of a perfluoroalkyl group-containing silicone oil to an alkyl-modified silicone oil. The heat radiating silicone composition thus obtained is also characterized by having good heat radiation properties and by having favorable oil separation and evaporation even when exposed to high temperatures.

### Examples

Examples and Comparative Examples will now be given, but the present invention is not limited to Examples given below.

### Preparation of heat radiating silicone composition, and test categories

Raw materials were weighed out as shown in the tables for Examples given below, and a heating vessel (planetary mixer) equipped with a stirring device and a defoaming device was used to heat, defoam, knead and homogenize the material. The heat radiating silicone composition thus obtained was measured for consistency as a grease, oil separation and amount of evaporation, according to JIS K 2220. The test conditions for oil separation comprised 24 hours at 150°C, and the conditions for evaporation comprised 22 hours at 99°C. Thermal conductivity was measured using a quick thermal conductivity meter QTM-500 (made by Kyoto Electronic) that employed a hot wire probe.

Tables 1 and 2 show the details for the alkyl-modified silicone oil (A-1) and the perfluoroalkyl group-containing silicone oils (F-1 and F-2) used in Examples.

Greases were prepared exactly in the same manner as in examples, using components listed in the Tables 3 and 4 for the purpose of observing differences depending on the presence or absence of the perfluoroalkyl group-containing silicone oil. Consistency, oil separation, evaporation and thermal conductivity were measured in exactly the same manner as in Examples.

As a result, as can be seen from Tables 3 and 4, when a perfluoroalkyl group-containing silicone oil is contained, the heat radiation properties are enhanced, a heat radiating grease having a small seepage into a coated object, an excellent thermal stability and heat radiation properties can be obtained. However, when no alkyl-modified silicone oil was used, and just a perfluoroalkyl group-containing silicone oil was used, the consistency shot up markedly, that is, the material was much more difficult to handle.

Greases were prepared exactly in the same manner as in Examples, using components listed in table 5 for the purpose of observing changes or differences in properties by using a mixture of aluminum and zinc oxide as the heat radiating filler. Consistency, oil separation, evaporation, and thermal conductivity were measured in exactly the same manner as in Examples.

It can be seen that, even when a mixture of aluminum and zinc oxide is used as the heat radiating filler, the heat radiation properties can be enhanced with incorporation of a perfluoroalkyl group-containing silicone oil. A heat radiating grease having a small seepage into a coated object, an excellent thermal stability and heat radiation properties can be obtained.

It can also be seen that the amount in which the perfluoroalkyl group-containing silicone oil is added is preferably 0.5 to 50 weight parts per 100 weight parts alkyl-modified silicone oil. If the perfluoroalkyl group-containing silicone oil accounts for less than 0.5 weight part per 100 weight parts alkyl-modified silicone oil, it will have no effect on heat radiation properties and thermal stability, but if it accounts for more than 50 weight parts, the resulting material will be more difficult to handle.

It can further be seen that aluminum and zinc oxide are preferable components if the product has maintained properties for a grease and has a high thermal conductivity. When this two-component heat radiating filler is used, handling can be particularly improved by using zinc oxide in a more amount than aluminum.

Greases were prepared exactly in the same manner as in Examples, using components listed in the table 6 for the purpose of observing if or not the characteristics were different when a mixture of aluminum, aluminum nitride and zinc oxide was used as the heat radiating filler. Consistency, oil separation, evaporation, and thermal conductivity were measured in exactly the same manner as in Examples.

It can be seen that even when a mixture of aluminum, aluminum nitride and zinc oxide is used as the heat radiating filler, the heat radiation properties are enhanced with incorporation of a perfluoroalkyl group-containing silicone oil. A heat radiating silicone composition having a small seepage into a coated object, an excellent thermal stability and heat radiation properties can be obtained.

From the standpoint of handling the material as a grease, it can be seen that the amount in which the perfluoroalkyl group-containing silicone oil is added is preferably from 0.5 to 50 weight parts, and especially 0.5 to 1 weight part, per 100 weight parts alkyl-modified silicone oil.

It can further be seen that to maintain the properties as a grease and obtain high thermal conductivity, when a three-component heat radiating filler is used, handling will be particularly good if the amounts in which the aluminum, zinc oxide and aluminum nitride are used decrease in that order.

Table 7 shows how greases were prepared in exactly the same manner as in Examples, with the components listed in the table, for the purpose of examining the properties when various metal fillers were used. Consistency, oil separation, evaporation and thermal conductivity were measured in exactly the same manner as in Examples.

It can be seen from Table 7 that a heat radiating silicone composition with even higher thermal conductivity can be obtained by using aluminum and zinc oxide as essential components of the heat radiating filler, and combining these with a filler selected from among aluminum nitride, aluminum oxide, boron nitride, and so forth.

**Table 1 Alkyl-modified silicone oil**

| Number | Kinetic viscosity cSt (25°C) | m | R¹ | R² |
|---|---|---|---|---|
| A-1 | 540 | 56 | -CH₃ | -(CH₂)₉CH₃ |

**Table 2 Perfluoroalkyl group-containing silicone oil**

| Number | Kinetic viscosity cSt (25°C) | l | m | n | R¹ | R² | R³ | R⁴ | R^{f} |
|---|---|---|---|---|---|---|---|---|---|
| F-1 | 160 | 2.1 | 2.0 | 3.8 | -CH₃ | -CH₃ | -Ph₂ * | -CH₃ | -CH₂CH₂(CF₂)₇CF₃ |
| F-2 | 500 | 3.5 | 2.0 | 10.1 | -CH₃ | -CH₃ | -Ph₂ * | -CH₃ | -CH₂CH₂(CF₂)₇CF₃ |

| | | | | | | | | | |
|---|---|---|---|---|---|---|---|---|---|
| * Ph indicates a phenyl group | | | | | | | | | |

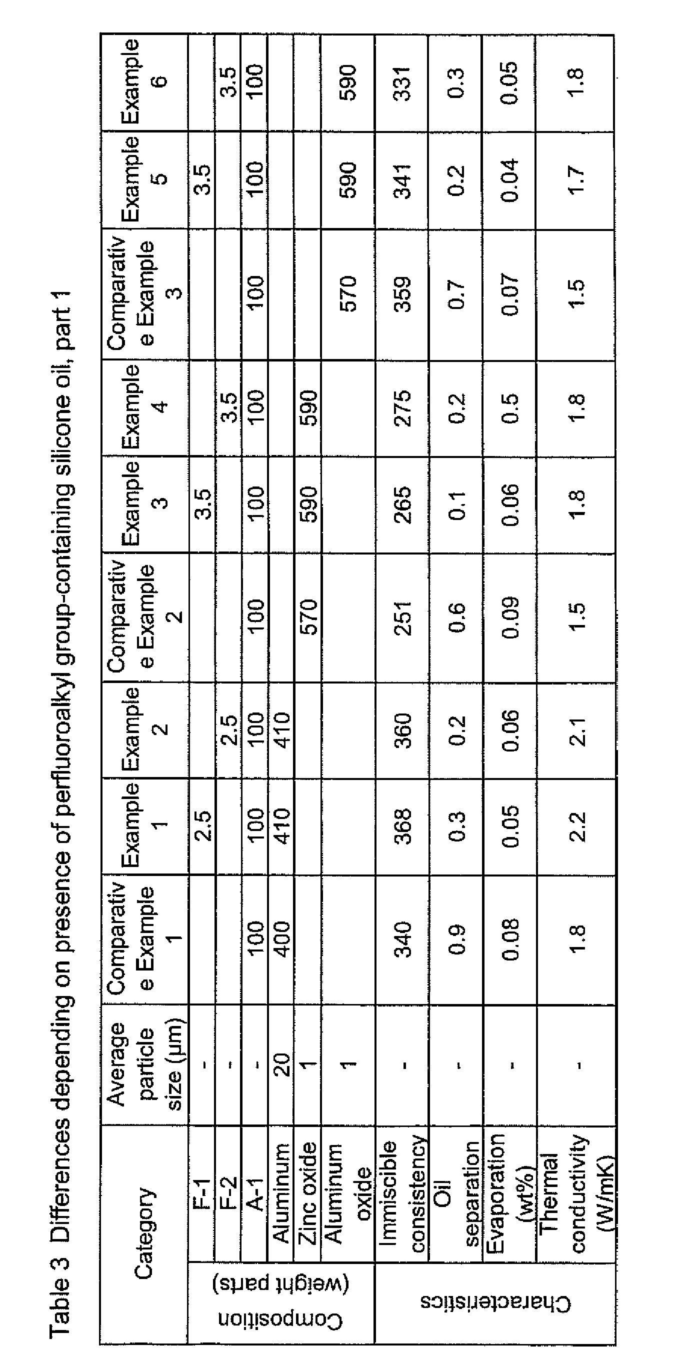

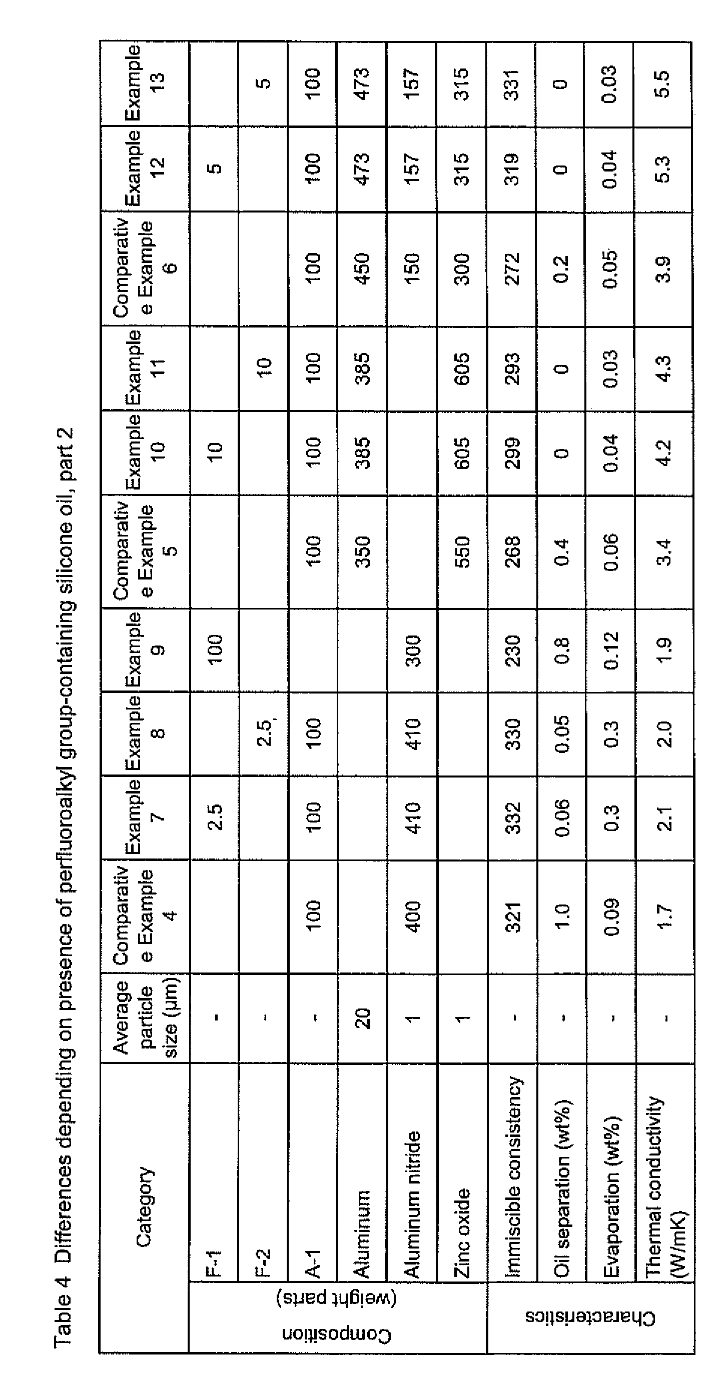

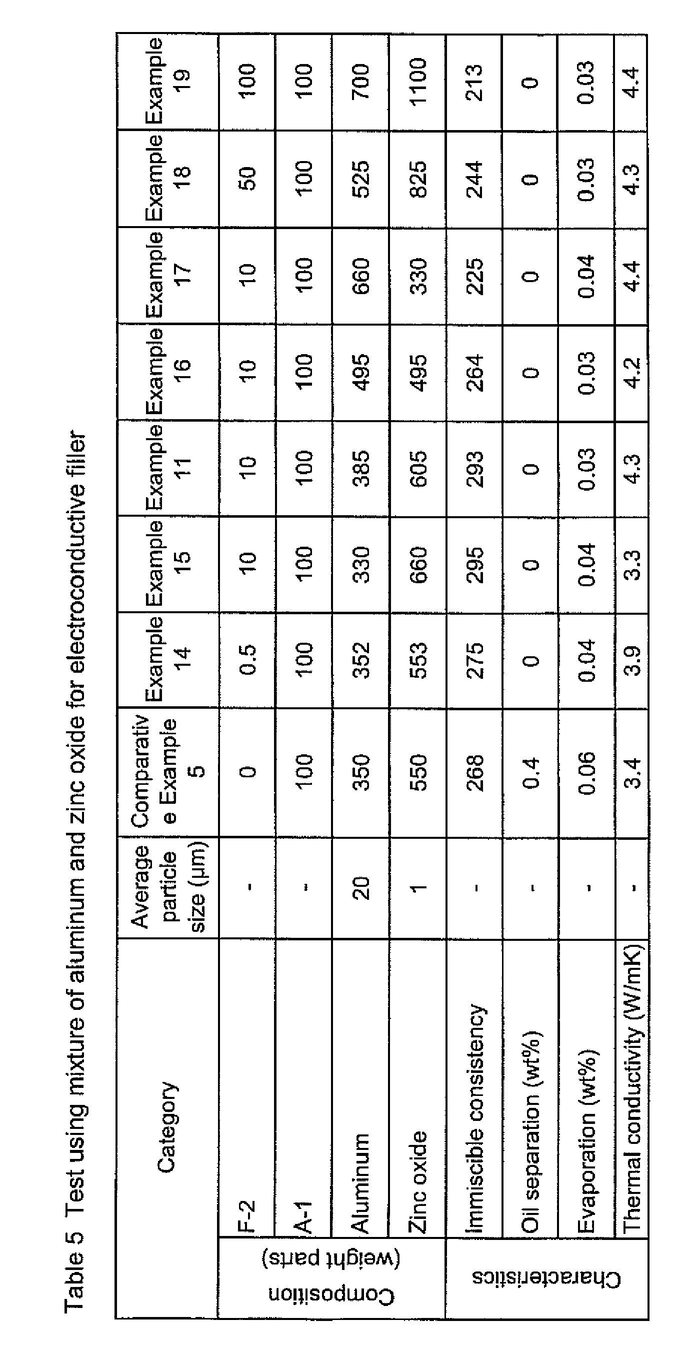

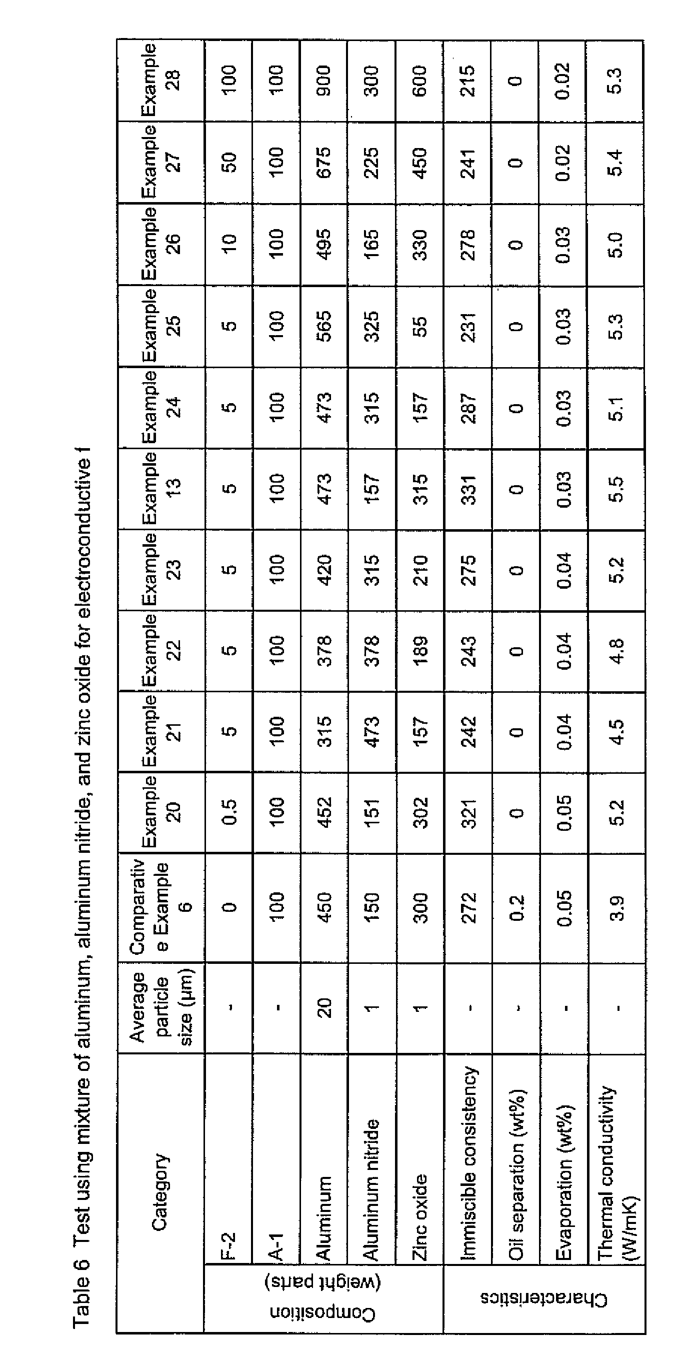

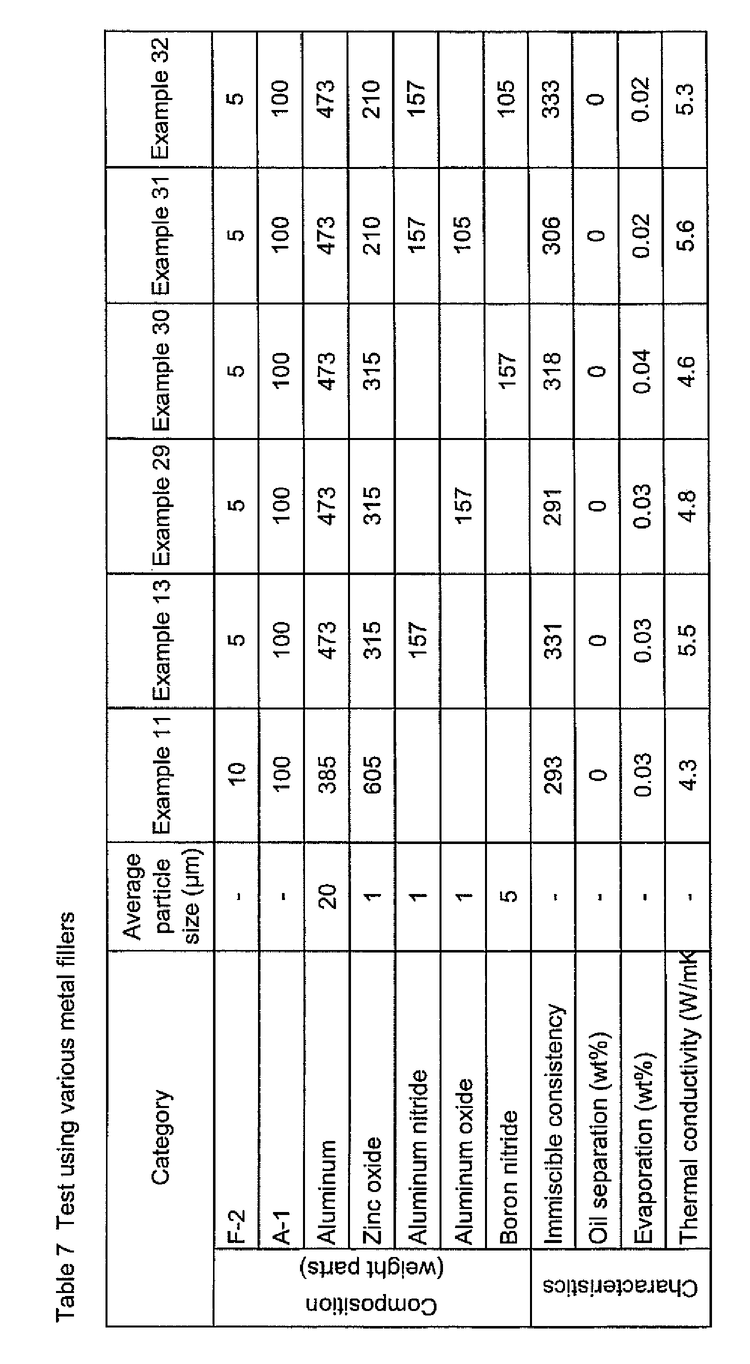

## Claims

1. A heat radiating silicone composition comprising (A) a perfluoroalkyl group-containing silicone oil expressed by the following formula (1), (B) a silicone oil and (C) a heat radiating filler: 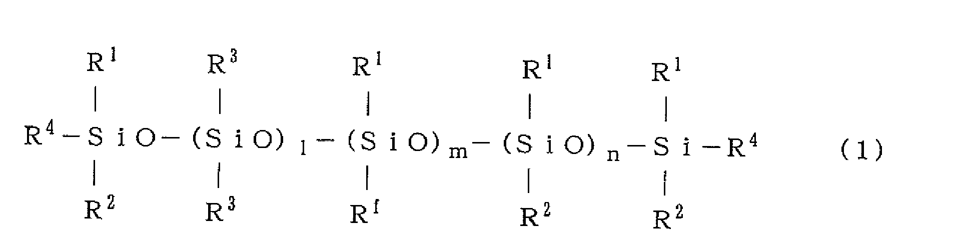 where R¹ is a C₁ to C₁₂ saturated hydrocarbon group, R² is a hydrogen or a C₁ to C₁₂ saturated or unsaturated hydrocarbon group, R³ is an aryl group, R^{f} is a C₁ to C₁₂ perfluoroalkyl group, R⁴ is a group selected from the group consisting of R¹, R², R³, R^{f} and OH, 1 and m are values of 1 or more on the average, and 1 + m + n is a number of 2 or more.

2. The heat radiating silicone composition according to Claim 1, wherein the above-mentioned component B is a silicone oil expressed by the following formula (2), whose viscosity at 25°C is from 10 to 100,000 cSt: 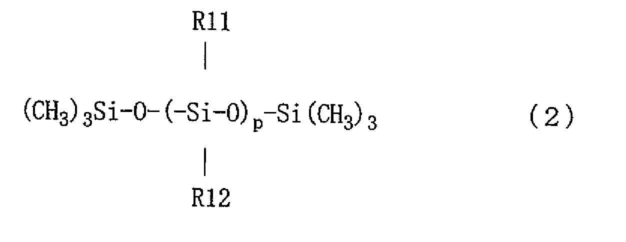 where R¹¹ is at least one hydrocarbon group selected from the group consisting of methyl group, ethyl group, propyl group, butyl group, vinyl group, allyl group and phenyl group, R¹² is a C₆ to C₂₀ alkyl or aralkyl group, and p is an integer from 3 to 100.

3. The heat radiating silicone composition according to Claim 1 or 2, which comprises the perfluoroalkyl group-containing silicone oil of component (A) in an amount of 0.5 to 50 weight parts per 100 weight parts of the silicone oil of component (B).

4. The heat radiating silicone composition according to any of Claims 1 to 3, wherein component (C) is at least one heat radiating filler selected from among aluminum, zinc oxide, aluminum oxide, aluminum nitride, boron nitride, and the like.

5. The heat radiating silicone composition according to any of Claims 1 to 3, wherein component (C) comprises aluminum and zinc oxide as essential components.

6. The heat radiating silicone composition according to any of Claims 1 to 3, wherein component (C) comprises aluminum and zinc oxide as essential components, and further comprises at least one filler selected from among aluminum nitride, aluminum oxide, boron nitride and the like.

7. Use of the silicone composition according to any of Claims 1 to 6 as a heat radiating material.

8. A method for radiating heat, comprising applying the silicone composition according to any of Claims 1 to 6 at a site where heat radiation is required.
